# EUROPÄISCHE PATENTSCHRIFT

(11) **EP 3 621 051 B1**
(45) Veröffentlichungstag und Bekanntmachung des Hinweises auf die Patenterteilung: **19.06.2024**
(21) Anmeldenummer: 19194517.9
(22) Anmeldetag: 30.08.2019
(51) Int. Cl.: G08G 1/00, B60Q 1/34, B60Q 1/50, B60Q 1/38

(54) **SIGNALANLAGE FÜR FAHRZEUGVERBAND**
VEHICLE COMBINATION SIGNALLING SYSTEM
INSTALLATION DE SIGNALISATION POUR LE CONVOI DE VÉHICULES

(30) Priorität: 06.09.2018 DE 102018121719
(43) Veröffentlichungstag der Anmeldung: 11.03.2020
(73) Patentinhaber: MAN Truck & Bus SE, 80995 München (DE)
(72) Erfinder: Michel, Britta, 81675 München (DE); Wölfel, Christiane, 81539 München (DE); Blank, Daniel, 93133 Burglengenfeld (DE)
(74) Vertreter: v. Bezold & Partner Patentanwälte - PartG mbB

(56) Entgegenhaltungen:
- WO-A1-2019/108108
- DE-A1-102016 012 383
- DE-A1-102016 216 680
- DE-A1-102016 220 054
- DE-A1-102017 201 196
- JP-A- 2014 130 409
- US-A1- 2002 070 849
- US-A1- 2017 361 762

## Beschreibung

Die vorliegende Erfindung betrifft Signalanlagen für Fahrzeuge eines Fahrzeugverbands. Insbesondere betrifft die Erfindung eine Signalanlage für ein Kraftfahrzeug, das an einem Kraftfahrzeugverband hintereinander fahrender Kraftfahrzeuge mit gemeinsamer Längsund/oder Quersteuerung teilnimmt oder teilzunehmen vermag.

In den kommenden Jahren fahren Kraftfahrzeuge, insbesondere Nutzfahrzeuge, zunehmend hintereinander in einem Kraftfahrzeugverband (kurz: Fahrzeugverband oder Verband) mit gemeinsamer Längs- und/oder Quersteuerung, der auch als "Platoon" bezeichnet wird. Dabei übernimmt der Fahrer des ersten Fahrzeugs oder ein autonom fahrendes Fahrzeug die Führung (Führungsfahrzeug). Die Fahrer der im Verband folgenden Fahrzeuge sind für die Dauer des Verbands von der Fahraufgabe entbunden. Die Fahrzeuge im Verband fahren dicht hintereinander, um so den Windschatten auszunutzen und damit Treibstoff zu sparen (Energieeffizienz). Ferner reduziert sich im Verband die durch die Fahrzeuge belegte Fahrbahnlänge je Fahrzeug, womit eine größere Transportkapazität pro Fahrbahn erreicht ist (Transporteffizienz).

Die Zusammengehörigkeit von Sattelzügen im Versuchsbetrieb wird derzeit über die Bedruckung der Zugmaschine bzw. des Aufliegers gekennzeichnet. Ferner bestehen aktuell nur im Versuchsbetrieb fahrende Platoons aus gleichen oder sehr ähnlich aussehenden Fahrzeugen desselben Herstellers, so dass sich eine Verbundenheit der Fahrzeuge erahnen lässt. Im Realbetrieb werden jedoch Fahrzeuge herstellerübergreifend und auch dynamisch während der Fahrt zusammengestellt.

Mit dem "Energy ITS Truck" des Herstellers Toyota sind Versuchsfahrzeuge bekannt, die am in Fahrtrichtung hinteren Ende des Aufliegers ein LED-Modul zur Textanzeige und einen Lampenindikator zur Statusanzeige aufweisen (Federal Highway Administration Research and Technology, Veröffentlichungsnummer FHWA-HRT-12-033, Dezember 2012). Diese ermöglichen eine Anzeige der Position im Platoon und des Betriebszustandes.

Der im Verband reduzierte Abstand zwischen den Fahrzeugen des Verbands (Verbandsfahrzeuge) ist durch die gemeinsame Längs- und/oder Quersteuerung ermöglicht. Dementsprechend ist es für den Verband problematisch, wenn sich andere Fahrzeuge (Fremdfahrzeuge) zwischen die Verbandsfahrzeuge drängen, da dann sehr schnell der Abstand zwischen den Verbandsfahrzeugen vergrößert werden muss. Die nach dem Fremdfahrzeug fahrenden Verbandsfahrzeuge werden abgebremst und beschleunigt zur Abstandsvergrößerung, und müssen nach dem Verlassen des Fremdfahrzeugs nochmals beschleunigen, um den Abstand erneut zu verringern. Dadurch kann die Energieeffizienz und/oder Transporteffizienz des Verbands erheblich absinken. Dabei schert das Fremdfahrzeugs oftmals unbewusst oder unabsichtlich in den Verband ein.

Dokument US 2017/361762 A1 offenbart ein System, umfassend einen Lichtquellenprojektor mit einem Stellantrieb, der an einem Objektfahrzeug angebracht ist und eine Laserlinie auf eine Straße, auf der das Objektfahrzeug fährt, projiziert. Eine Steuereinheit steht in Kommunikation mit einem Zugfahrzeug, das in einem Zug vor oder hinter dem betreffenden Objektfahrzeug fährt, und steuert den Stellantrieb, um die Laserlinie auf die Fahrbahn zwischen dem betreffenden Fahrzeug und dem mindestens einen Zugfahrzeug zu projizieren.

Dokument DE 10 2016 216 680 A1 offenbart ein Verfahren zur Kommunikation der Intention eines Fahrzeugs an zumindest einen Verkehrsteilnehmer, wobei für ein geplantes Fahrmanöver des Fahrzeugs, das den weiteren Verkehrsteilnehmer beeinträchtigen kann, diesem geplanten Fahrmanöver eine Intention in Bezug auf die Durchführung des Fahrmanövers zugeordnet wird und diese Intention an den weiteren Verkehrsteilnehmer kommuniziert wird.

Somit besteht die Aufgabe, eine Technik für Verbandsfahrzeuge anzugeben, welche ein unbewusstes oder unabsichtliches Einscheren von Fremdfahrzeugen verhindert.

Diese Aufgabe wird durch eine Signalanlage und ein entsprechendes Kraftfahrzeug mit den Merkmalen der unabhängigen Ansprüche gelöst. Vorteilhafte Ausführungsformen und Anwendungen der Erfindung sind Gegenstand der abhängigen Ansprüche werden in der folgenden Beschreibung unter teilweiser Bezugnahme auf die Figuren näher erläutert.

Gemäß einem Aspekt der Erfindung ist eine Signalanlage für ein Kraftfahrzeug, insbesondere ein Nutzfahrzeug, bereitgestellt. Das Kraftfahrzeug (auch: Verbandsfahrzeug oder kurz: Fahrzeug) ist dazu ausgebildet, an einem Kraftfahrzeugverband (auch: Fahrzeugverband, Verband oder Platoon) hintereinander fahrender Kraftfahrzeuge mit gemeinsamer Längsund/oder Quersteuerung teilzunehmen. Die Signalanlage ist dazu ausgebildet, im Außenbereich des Kraftfahrzeugs eine Zuordnung zu mindestens einem weiteren Kraftfahrzeug (auch: weiteres Verbandsfahrzeug oder kurz: weiteres Fahrzeug) des Kraftfahrzeugverbands optisch anzuzeigen. Das mindestens eine weitere Kraftfahrzeug des Kraftfahrzeugverbands fährt vorzugsweise unmittelbar vor und/oder hinter dem Kraftfahrzeug im Kraftfahrzeugverband.

Ausführungsbeispiele der Signalanlage können zumindest in bestimmten Situationen verhindern, dass Fremdfahrzeuge oder anderen Verkehrsteilnehmern unbewusst oder unabsichtlich in den Verband einscheren, indem durch die optisch angezeigte Zuordnung deutlich gemacht ist, dass bestimmte Fahrzeuge (nämlich das Fahrzeug und das mindestens eine weitere Fahrzeug) im Verband fahren. Selbige oder weitere Ausführungsbeispiele der Signalanlage können beim An- und/oder Abkoppeln von Verbandsfahrzeugen (auch: Platoon-Teilnehmern) die bestimmten Fahrzeuge entsprechend kennzeichnen. Außerdem können hinter dem Platoon fahrende Fahrzeuge rechtzeitig über ein Manöver des Platoons informiert werden, damit sie angemessen reagieren können.

Ähnliche oder weitere Ausführungsbeispiele der Signalanlage können die Zusammengehörigkeit von Verbandsfahrzeugen (auch: Platoon-Partnern) durch die Kennzeichnung außen am Verbandsfahrzeug (beispielsweise am LKW oder Auflieger) oder am Boden (beispielsweise um die Verbandsfahrzeuge herum) optisch anzeigen. Dabei können an der Außenhaut des Fahrzeugs vorhandene Lichter angesteuert werden. Alternativ oder ergänzend können Manöver des Verbands optisch angezeigt werden.

Die Signalanlage des Kraftfahrzeugs ermöglicht im Außenbereich eine visuelle Zuordnung des Kraftfahrzeugs zu dem mindestens einen weiteren Kraftfahrzeug. Die optisch angezeigte Zuordnung kann einer Zugehörigkeit des Kraftfahrzeugs zu dem mindestens einen weiteren Kraftfahrzeug und/oder dem Kraftfahrzeugverband entsprechen. Die Signalanlage kann eine Relation zwischen in Längsrichtung benachbarter und/oder unmittelbar benachbarter Kraftfahrzeuge des Kraftfahrzeugverbands optisch anzeigen.

Die Zuordnung kann wahlweise angezeigt werden, beispielsweise abhängig von einem Zustand des Kraftfahrzeugverbands.

Das Kraftfahrzeug und das mindestens eine weitere Kraftfahrzeug können den Kraftfahrzeugverband oder einen Teil dessen bilden.

Die hintereinander fahrenden Kraftfahrzeuge können voneinander beabstandet sein und/oder berührungslos zur Längs- und/oder Quersteuerung gekoppelt sein. Vorzugsweise sind mechanisch gekoppelte Wagen keine hintereinander fahrenden Kraftfahrzeuge.

Ein Zustand des Kraftfahrzeugverbands und/oder ein Zustand der Zuordnung wird optisch angezeigt. Es wird ein Zustand gemeinsamer Längs- und/oder Quersteuerung angezeigt. Die angezeigte Zuordnung entspricht einer gemeinsamen Längsund/oder Quersteuerung des Kraftfahrzeugs und des mindestens einen weiteren Kraftfahrzeugs.

Die Signalanlage kann ferner dazu ausgebildet sein, eine Änderung des Zustands optisch anzuzeigen. Vorzugsweise kann ein Herstellen und/oder Auflösen des Zustands der gemeinsamen Längs- und/oder Quersteuerung angezeigt sein.

Die Signalanlage ist ausgebildet, zur Erfassung des anzuzeigenden Zustands oder der anzuzeigenden Änderung des Zustands mit mindestens einer Komponente des Kraftfahrzeugs in Signalverbindung zu stehen, die zur gemeinsamen Längs- und/oder Quersteuerung ausgebildet ist.

Diese Komponente des Kraftfahrzeugs kann eine Funkschnittstelle sein zur Datenkommunikation mit früheren, bestehenden oder zukünftigen Kraftfahrzeugen des Kraftfahrzeugverbands, vorzugsweise mit dem mindestens einen weiteren Kraftfahrzeug, mit einem Führungsfahrzeug des Kraftfahrzeugverbands, mit dem unmittelbar vor dem Kraftfahrzeug fahrenden Kraftfahrzeug und/oder dem unmittelbar hinter dem Kraftfahrzeug fahrenden Kraftfahrzeug des Kraftfahrzeugverbands. Alternativ oder ergänzend kann diese Komponente des Kraftfahrzeugs Sensoren zum Messen einer Geschwindigkeit von und/oder eines Abstands zu mindestens einem weiteren Fahrzeug umfassen, vorzugsweise dem unmittelbar vor und/oder hinter dem Kraftfahrzeug fahrenden Kraftfahrzeug des Kraftfahrzeugverbands und/oder einem Fremdfahrzeug außerhalb des Kraftfahrzeugverbands. Alternativ oder ergänzend kann diese Komponente des Kraftfahrzeugs Aktuatoren zur Umsetzung von Steuerbefehle der Längs- und/oder Quersteuerung umfassen. Alternativ oder ergänzend kann diese Komponente des Kraftfahrzeugs einer Steuerungseinheit der Längs- und/oder Quersteuerung zum Empfangen, Verarbeiten und/oder Senden von Steuerbefehlen und/oder Messdaten der Längs- und/oder Quersteuerung umfassen.

Hierzu kann die Steuerungseinheit an die Funkschnittstelle, die Sensoren und/oder die Aktuatoren angeschlossen sein. Die Steuerungseinheit kann eine Regelung einer Längsbeschleunigung, einer Längsverzögerung und/oder eines Lenkwinkels des Kraftfahrzeugs umfassen.

Die Sensoren können Ultraschallabstandssensoren, eine Stereokamera, einen Radar-Sensor und/oder einen Lidar-Sensor (für englisch: light detection and ranging) umfassen.

Die Signalanlage kann einen Fahrtrichtungsanzeiger, Umrissleuchten und/oder Positionslichter des Kraftfahrzeugs umfassen. Die Signalanlage kann dazu ausgebildet sein, von der Steuerungseinheit einen den oder die Fahrtrichtungsanzeiger, Umrissleuchten und/oder Positionslichter zum Anzeigen der Zuordnung steuernden Zustand oder eine Änderung des Zustands zu erfassen.

Die Signalanlage ist dazu ausgebildet, von der Steuerungseinheit einen Zustand zur Führung eines einscherenden Fremdfahrzeugs zu erfassen und einen Bereich zum Einscheren des Fremdfahrzeugs zwischen dem Kraftfahrzeug und dem mindestens einen weiteren Kraftfahrzeug anzuzeigen. Das Fremdfahrzeug kann auf einer Überholspur oder an einer Einfahrt bezüglich der Fahrbahn des Kraftfahrzeugverbands mittels der Sensoren erfasst werden, beispielsweise in zeitlicher Korrelation mit einer Erfassung von Gegenverkehr.

Die Signalanlage kann dazu ausgebildet sein, einen gemeinsamen Spurwechsel der Kraftfahrzeuge des Kraftfahrzeugverbands im Außenbereich optisch übereinstimmend anzuzeigen, wobei das übereinstimmende Anzeigen des Spurwechsels die Zuordnung anzeigt. Die Zuordnung kann angezeigt sein durch ein gleichförmiges Anzeigen des Spurwechsels entlang der Kraftfahrzeuge des Kraftfahrzeugverbands und/oder durch ein synchrones Blinken der Fahrtrichtungsanzeiger der Kraftfahrzeuge des Kraftfahrzeugverbands beim Spurwechsel.

Die Signalanlage kann mindestens eine Projektionseinheit umfasst. Das optische Anzeigen der Zuordnung kann eine Lichtprojektion mittels der mindestens einen Projektionseinheit auf eine von den hintereinander fahrenden Kraftfahrzeugen des Kraftfahrzeugverbands gemeinsam genutzte Fahrbahn umfassen.

Die Lichtprojektion kann sich auf der Fahrbahn zwischen dem Kraftfahrzeug und dem mindestens einen weiteren Kraftfahrzeug des Kraftfahrzeugverbands erstrecken. Die Projektion kann in Längsrichtung (z.B. im Wesentlichen) dem Abstand zwischen dem Kraftfahrzeug und dem mindestens einen weiteren Kraftfahrzeug des Kraftfahrzeugverbands entsprechen.

Auf der Fahrbahn kann die Lichtprojektion des Kraftfahrzeugs mit einer weiteren Lichtprojektion des mindestens einen weiteren Kraftfahrzeugs überlappen. Durch die überlappenden Projektionen können die Kraftfahrzeuge als zu einem Kraftfahrzeugverband visuell kenntlich gemacht werden. Insbesondere kann eine stetige Linie die Kraftfahrzeuge des Kraftfahrzeugverbands verbinden, umgeben und/oder einrahmen.

Die Signalanlage kann mindestens eine sich an einer Seitenkante des Dachs des Kraftfahrzeugs in Längsrichtung erstreckende Lichtleiste umfassen. Die Zuordnung kann mittels der mindestens einen Lichtleiste angezeigt werden.

Ein durchgehendes Lichtsignal der Lichtleiste kann einem Zustand gemeinsamer Längsund/oder Quersteuerung entsprechen. Ein Lauflichtsignal der Lichtleiste hin zum weiteren Kraftfahrzeug kann einem Herstellen des Zustands gemeinsamer Längs- und/oder Quersteuerung entsprechen. Ein Lauflichtsignal der Lichtleiste weg vom weiteren Kraftfahrzeug kann einem Auflösen des Zustands gemeinsamer Längs- und/oder Quersteuerung entsprechen.

Gemäß einem weiteren Aspekt ist ein Kraftfahrzeug, insbesondere ein Nutzfahrzeug, bereitgestellt, das mindestens eine Signalanlage gemäß einer Ausführung des vorgenannten Aspekts umfasst. Kraftfahrzeug kann das dazu ausgebildet sein, an einem Kraftfahrzeugverband hintereinander fahrender Kraftfahrzeuge mit gemeinsamer Längs- und/oder Quersteuerung teilzunehmen. Das Nutzfahrzeug kann beispielsweise ein Bus, ein Lastkraftwagen, eine Zugmaschine oder ein Sattelzug sein.

Weitere Merkmale und Vorteile der Erfindung werden im Folgenden unter Bezugnahme auf die beigefügten Zeichnungen beschrieben. Es zeigten:
- Figur 1: eine schematische Darstellung eines ersten Ausführungsbeispiels der Signalanlage;
- Figur 2: eine schematische Darstellung einer Variante des ersten Ausführungsbeispiels der Signalanlage;
- Figur 3: eine schematische Darstellung eines zweiten Ausführungsbeispiels der Signalanlage;
- Figur 4: eine schematische Darstellung eines dritten Ausführungsbeispiels der Signalanlage;
- Figur 5: eine schematische Darstellung einer Zustandsherstellung mittels zeichenhafter Lichtprojektion;
- Figur 6: eine schematische Darstellung einer Zustandsherstellung mittels Lichtprojektion für das zweite Ausführungsbeispiel;
- Figur 7: eine schematische Darstellung einer Zustandsherstellung für das dritte Ausführungsbeispiel;
- Figur 8A: eine schematische Darstellung eines ersten Ausführungsbeispiels zum Spurwechsel;
- Figur 8B: eine schematische Darstellung eines zweiten Ausführungsbeispiels zum Spurwechsel;
- Figur 9: eine schematische Darstellung einer Zustandsauflösung mittels zeichenhafter Lichtprojektion;
- Figur 10: eine schematische Darstellung einer Zustandsauflösung mittels Lichtprojektion für das zweite Ausführungsbeispiel;
- Figur 11: eine schematische Darstellung einer Zustandsauflösung für das dritte Ausführungsbeispiel;
- Figur 12: eine schematische Darstellung eines ersten Ausführungsbeispiels zum Einschervorgang;
- Figur 13: eine schematische Darstellung eines zweiten Ausführungsbeispiels zum Einschervorgang;
- Figur 14: eine schematische Darstellung eines dritten Ausführungsbeispiels zum Einschervorgang; und
- Figur 15: eine schematische Darstellung eines Ausführungsbeispiels für einen gemischten Verband.

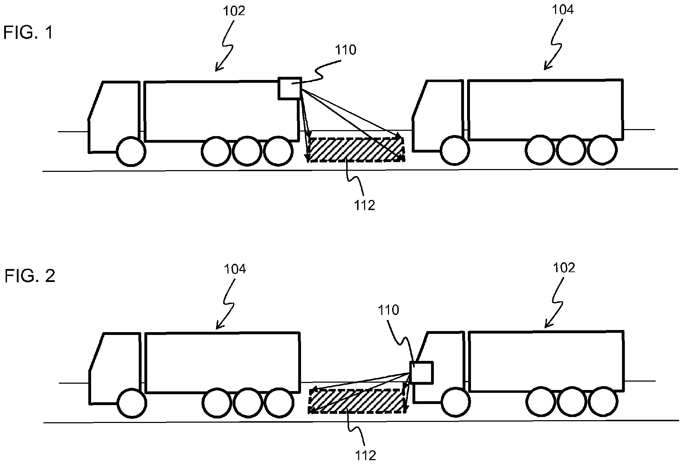

Figur 1 zeigt schematisch ein Beispiel eines allgemein mit Bezugszeichen 100 bezeichneten Verbands, zu dem ein Kraftfahrzeug 102 und ein weiteres Kraftfahrzeug 104 gehören. Während in der folgenden Beschreibung vom Kraftfahrzeug 102 als dem erfindungsgemäß ausgebildeten Verbandsfahrzeug ausgegangen wird, kann in jedem Ausführungsbeispiel alternativ oder ergänzend das Kraftfahrzeug 104 erfindungsgemäß ausgebildet sein.

Eine Signalanlage 110 für das Kraftfahrzeug 102 ist dazu ausgebildet, im Außenbereich des Kraftfahrzeugs 102 eine Zuordnung zu mindestens einem weiteren Kraftfahrzeug 104 des Kraftfahrzeugverbands 100 optisch anzuzeigen. Vorzugsweise fährt im Kraftfahrzeugverband 100 das weitere Kraftfahrzeug 104 unmittelbar vor und/oder hinter dem Kraftfahrzeug 102.

Im in Figur 1 schematisch gezeigten ersten Ausführungsbeispiel der Signalanlage 110 ist die Zuordnung des Fahrzeugs 102 zum Fahrzeug 104, also die Zusammengehörigkeit der Fahrzeuge 102 und 104, durch eine Lichtprojektion 112 auf den Boden (beispielsweise die Fahrbahn) und/oder durch einen in der Luft sichtbaren Lichtstrahl optisch angezeigt.

Die Lichtprojektion 112 am Boden oder der sichtbare Lichtstrahl erstreckt sich im Wesentlichen entlang einer Lücke zwischen den Fahrzeugen 102 und 104, wodurch die Zuordnung optisch angezeigt ist. Beispielsweise umfasst die Lichtprojektion 112 eine diagonal schraffierte Fläche als eine sich mit dem Verband 100 bewegende Sperrfläche. Beim in Figur 1 schematisch gezeigten ersten Ausführungsbeispiel projiziert die Signalanlage 110 Licht 112 auf den Boden in Fahrtrichtung hinter dem Fahrzeug 102.

In einer in Figur 2 schematisch gezeigten Variante des ersten Ausführungsbeispiels projiziert die Signalanlage 110 Licht 112 auf den Boden in Fahrtrichtung vor dem Fahrzeug 102. Alternativ oder ergänzend können sich die Lichtprojektionen 112 der im Verband 100 hintereinander fahrenden Fahrzeuge 102 und 104 ergänzen oder überlappen.

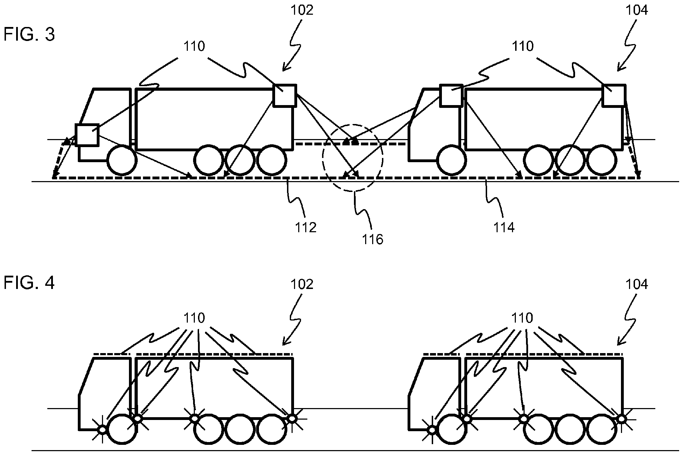

In einem in Figur 3 schematisch gezeigten zweiten Ausführungsbeispiel projiziert die Signalanlage 110, beispielsweise mittels an der Front und dem Heck des Fahrzeugs 102 angeordneten Projektoren, mindestens eine durchgehende Linie 112 parallel zur Längsrichtung des Fahrzeugs 102. Die mindestens eine projizierte Linie 112 überlappt jeweils mit einer vom weiteren Fahrzeug 104 projizierten Linie 114. Durch die sich über die Länge des Fahrzeugs 102 hinaus erstreckende Linie 112 ist die Zuordnung zum weiteren Fahrzeug 104 optisch angezeigt. Durch die Überlappung 116 der projizierten Linien 112 der Fahrzeuge 102 und 104 ist die Zugehörigkeit dieser Fahrzeuge 102 und 104 zum Verband 100 angezeigt.

Vorzugsweise umfasst die mindestens eine Linie 112 jeweils eine Linie auf jeder Seite des Fahrzeugs 102 und/oder eine abschließende Querlinie quer zur Längsrichtung am Anfang und Ende des Verbands 102. Beispielsweise kann die Zugehörigkeit durch eine geschlossene Linie 112-114 um die Fahrzeuge 102 und 104 des Verbands 110 herum angezeigt werden.

In einem in Figur 4 schematisch gezeigten dritten Ausführungsbeispiel umfasst die Signalanlage 110 Lichter an den beteiligten Fahrzeugen 102 und 104, z.B. Lichtleisten (beispielsweise LED-Streifen) am Dach und/oder (zumindest teilweise bestehende) Außenpositionslampen (beispielsweise bei Sattelzügen oder LKWs als Fahrzeug 102 und 104 am Auflieger oder Laderaum).

Die Merkmale, insbesondere der Signalanlage 110, von zwei oder mehr Ausführungsbeispielen sind kombinierbar. Beispielsweise kann die projizierte Sperrfläche zwischen Verbandsfahrzeugen mit der projizierten geschlossenen Linie um die Verbandsfahrzeuge herum kombiniert sein.

In jedem Ausführungsbeispiel umfasst die gemeinsame Längs- und/oder Quersteuerung (auch: Platooning-Funktion) eine Längs- und/oder Querführung und/oder eine Längs- und/oder Querregelung für die Fahrt im Verband (auch: Platoon-Fahrt). Die gemeinsame Längs- und/oder Quersteuerung kann auf einer Funkkommunikation zwischen den beteiligten Fahrzeugen 102 und 104 basieren. Die Funkkommunikation kann über eine Fahrzeugzu-Fahrzeug-Schnittstelle (V2V-Schnittstelle) erfolgen, beispielsweise gemäß dem Standard für Intelligente Transportsysteme (ITS) und/oder der fünften Mobilfunkgeneration, die vom 3rd Generation Partnership Project (3GPP) herstellerübergreifend festgelegt wird.

Für die Längs- und/oder Quersteuerung relevante Statusinformationen, insbesondere Messdaten, werden mittels Sensoren im bzw. am Fahrzeug 102 erfasst. Zum Einsatz kommen insbesondere Kameras, Laserscanner, Radar-Sensoren, Ultraschallsensoren und/oder GPS-Empfänger. Die Messdaten können Abstände und/oder Geschwindigkeiten der Verbandsfahrzeuge zueinander und/oder zu Fremdfahrzeugen umfassen. Die Statusinformationen können das Einscheren oder Ausscheren eines Fremdfahrzeugs in den Verband angeben.

In jedem Verbandsfahrzeug 102 und 104 kann jeweils eine Steuerungseinheit zur gemeinsamen Längs- und/oder Quersteuerung vorhanden sein. Ein Zustand oder eine Zustandsänderung der Verbandsfahrzeuge (auch: Teilnehmer) wird von der Platooning-Funktion zur Verfügung gestellt und von der Signalanlage entsprechend angezeigt. Die Platooning-Funktion kann so aufgebaut sein, dass jedes Verbandsfahrzeug 102 und 104 jeweils seinen eigenen Zustand aus den mit den anderen Fahrzeugen geteilten Statusinformationen berechnet. Alternativ oder ergänzend kann ein Platoon-Koordinator (beispielsweise im Führungsfahrzeug) relevante Statusinformationen und/oder Zustände an die entsprechenden Verbandsfahrzeuge senden.

Während die Ausführungsbeispiele der Figuren 1 bis 4 das Anzeigen eines Zustands der gemeinsamen Längs- und/oder Quersteuerung ermöglichen, kann die Signalanlage 110 alternativ oder ergänzend Änderungen des Zustands anzeigen. Beispielsweise können Anund/oder Abkoppelvorgänge optisch angezeigt werden.

Platoon-Vorgänge wie das An- und/oder Abkoppeln können ebenfalls mittels der Lichtprojektion 112 (beispielsweise analog zum ersten oder zweiten Ausführungsbeispiel) oder den Lichtern (beispielsweise analog zum dritten Ausführungsbeispiel) an den Verbandsfahrzeugen 102 und 104 (insbesondere an deren Aufliegern) optisch angezeigt werden.

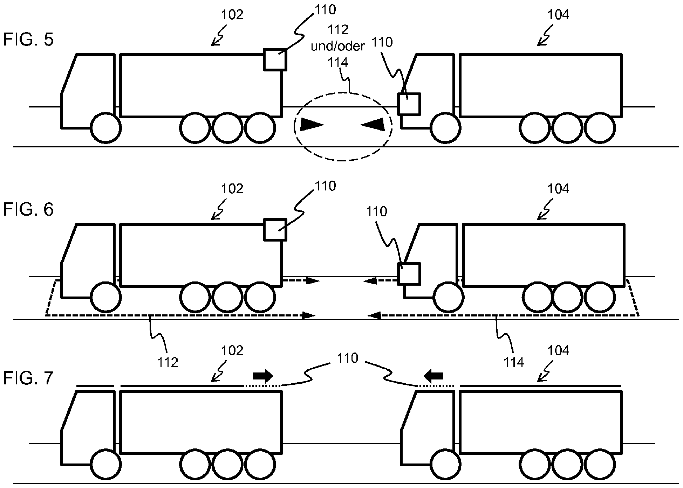

Figur 5 zeigt schematisch eine zeichenhafte Lichtprojektion 112 zwischen den Verbandsfahrzeugen 102 und 104, die das Herstellen eines Zustands der gemeinsamen Längsund/oder Quersteuerung anzeigt. Beispielsweise kann die Lichtprojektion beim Ankoppeln Pfeile umfassen. Jedem Verbandsfahrzeug 102 und 104 ist mindestens ein Pfeil räumlich zugeordnet. Die verschiedenen Verbandsfahrzeugen zugeordneten Pfeile sind aufeinander (d.h. auf das jeweils andere Verbandsfahrzeug) gerichtet.

Figur 6 zeigt schematisch eine Lichtprojektion 112, die Pfeile an einer umlaufenden Linie kombiniert.

Alternativ oder ergänzend, kann das Herstellen des Zustands durch eine Bewegung optisch angezeigt sein. Beispielsweise können, wie in Figur 7 schematisch dargestellt, beim Ankoppeln sequentiell eingeschaltete Lichter (insbesondere in den Lichtleisten am Dach oder die Außenpositionslampen) auf einander zu laufen. Bei Abkoppelvorgängen kann die projizierte Pfeilrichtung und/oder die Bewegung der eingeschalteten Lichter entgegengesetzt sein.

Jedes Ausführungsbeispiel der Signalanlage 110 kann ferner einen Fahrspurwechsel des Verbands 100 optisch anzeigen. Dadurch wird der Fahrspurwechsel des kompletten Platoons 100 den umgebenden Verkehrsteilnehmern mitgeteilt. Eine Richtung des Fahrspurwechsels (Spurwechselrichtung) kann beispielsweise durch Projektion auf den Boden, durch einen sichtbaren Lichtstrahl in der Luft, durch LED-Streifen am Dach und/oder durch Nutzung der Außenpositionslampen angezeigt werden. Die Anzeige kann in Fahrrichtung entweder einseitig links bzw. rechts oder beidseitig erfolgen.

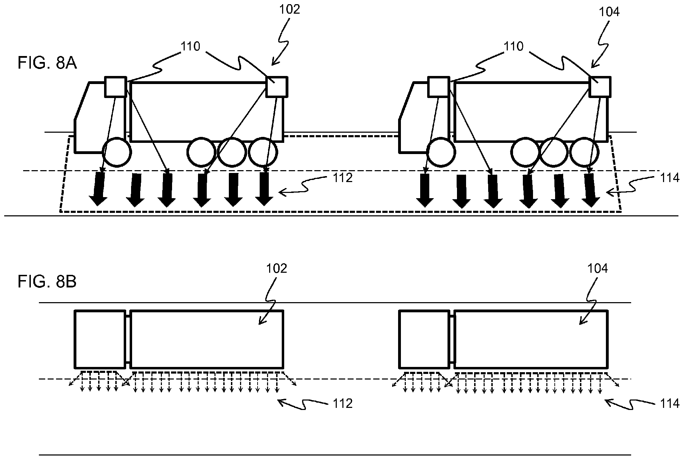

Figur 8A zeigt schematisch ein Ausführungsbeispiel einer einseitigen Projektion (d.h. nur in Spurwechselrichtung) auf den Boden (d.h. auf eine benachbarte Fahrbahn). Figur 8B zeigt in einer schematischen Draufsicht ein weiteres Ausführungsbeispiel, das Lichtleisten (beispielsweise LED-Streifen) auf dem Dach und/oder Außenpositionslampen (beispielsweise an der Fahrzeugseite) zum gemeinsamen Anzeigen der Spurwechselrichtung einsetzt. Durch das gemeinsame Anzeigen ist zugleich die Zugehörigkeit der Fahrzeuge 102 und 104 zum selben Verband 100 angezeigt. Optional ist jedes Ausführungsbeispiel zum Anzeigen der Spurwechselrichtung mit einem der ersten drei Ausführungsbeispiele kombinierbar, wie in Figur 8A für das zweite Ausführungsbeispiel dargestellt.

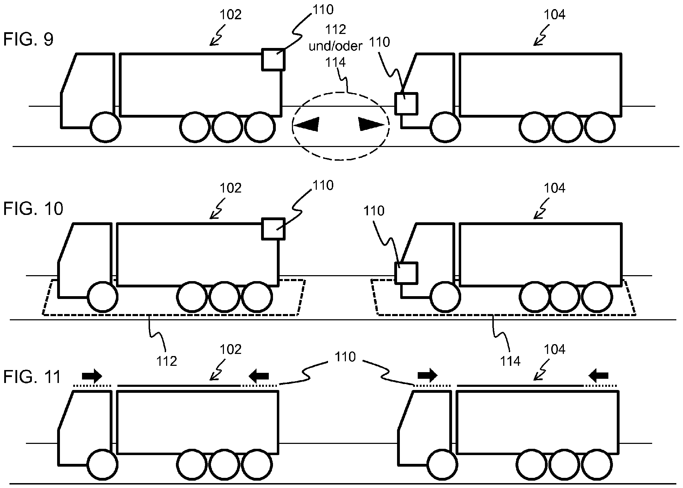

Jedes Ausführungsbeispiel der Signalanlage 110 kann ferner die (beispielsweise teilweise oder lokale) Auflösung des Verbands 100 optisch anzeigen. Die Platoon-Fahrt wird beendet und der Verband 100 (zumindest teilweise) aufgelöst. Dieser Vorgang wird beispielsweise durch eine Projektion auf den Boden (beispielsweise gemäß Figur 9 oder 10), durch einen sichtbaren Lichtstrahl in der Luft, durch Lichtleisten (beispielsweise LED-Streifen) am Dach (beispielsweise gemäß Figur 11) und/oder durch Nutzung der Außenpositionslampen angezeigt.

Figur 9 zeigt ein Ausführungsbeispiel mit einer Lichtprojektion 112 und/oder 114 zur Kennzeichnung mittels Pfeile auf dem Boden zwischen den Fahrzeugen 102 und 104.

Figur 10 zeigt schematisch das Auflösen der gemeinsamen geschlossenen Linie 112-114 um den Verband 100 gemäß dem zweiten Ausführungsbeispiel zu separaten geschlossenen Linien 122 und 114 um jedes Fahrzeuge 102 bzw. 104 herum.

Figur 11 zeigt schematisch das Auflösen des Zustands der gemeinsamen Längs- und/oder Quersteuerung mittels Lichtleisten (beispielsweise LED-Streifen) am Dach, die jeweils eine Bewegung zur Fahrzeugmitte hin anzeigen.

Jedes Ausführungsbeispiel führt ferner das Einscheren eines Fremdfahrzeugs.

Fremdfahrzeugen, die beispielsweise den Verband 100 überholen möchten und das Überholmanöver nicht beenden können, kann ein Bereich 118 zwischen den Verbandsfahrzeugen als eine Möglichkeit zum Einscheren aufgezeigt werden.

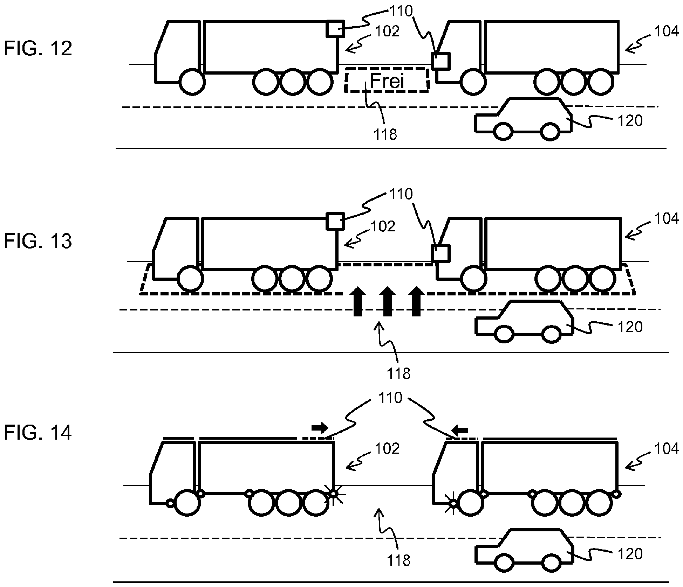

Dazu wird einem überholenden Fremdfahrzeug 120 durch Projektion auf den Boden (beispielsweise gemäß Figur 12 oder 13), durch einen sichtbaren Lichtstrahl in der Luft, durch Lichtleisten (beispielsweise LED-Streifen) am Dach und/oder durch Nutzung der Außenpositionslampen (beispielsweise gemäß Figur 14) angezeigt, an welcher Position des Verbands 100 (d.h. in welchen Bereich 118 zwischen aufeinanderfolgenden Verbandsfahrzeugen 102 und 104) vorzugsweise eingeschert werden soll.

Das Aufzeigen eines Bereichs 118 zum Einscheren kann weiterführend bei Einfädelvorgängen auf Autobahn- oder Schnellstraßenauffahrten genutzt werden, insbesondere um den auffahrenden Fahrzeugen (Fremdfahrzeugen oder zukünftigen Verbandsfahrzeugen) den Zugang zu erleichtern oder zu ermöglichen. Ein entsprechender umgekehrter Vorgang kann für Abfahrten ausgeführt werden.

Figur 12 zeigt schematisch ein optisches Anzeigen des Bereichs 118 als Einschermöglichkeit durch Projektion auf den Boden zwischen den Verbandsfahrzeugen 102 und 104 mittels Projektoren der Signalanlage 110 am Verbandsfahrzeug 102 und/oder 104.

Das Anzeigen mittels projizierter Pfeile quer zur Fahrtrichtung gemäß Figur 13 kann in Fahrrichtung entweder links oder rechts erfolgen, beispielsweise für Links- bzw. Rechtsverkehr. Dieses Ausführungsbeispiel ist vorteilhaft kombinierbar mit der umlaufenden Linie 112 um die Verbandsfahrzeuge 102 und 104.

Figur 14 zeigt ein Ausführungsbeispiel, das Lichtstreifen (beispielsweise LED Streifen auf dem Dach) an den Enden des Bereichs 118 und/oder Außenpositionslampen einschaltet. Die Lichtstreifen können eine Bewegung zum Bereich 118 hin anzeigen. In Abgrenzung zum Ankopplungsvorgang können die Lichtstreifen und/oder Außenpositionslampen nur an den Enden des Bereichs 118 eingeschaltet sein.

Ein Platoon kann aus verschiedenen Fahrzeugtypen bestehen (auch: "gemischter" Platoon). Beispielsweise kann dies ein Verbund aus Lastkraftwagen, Kleintransportern oder Personenkraftwagen sein. Um die Verbindung oder Zugehörigkeit der Fahrzeuge zum Platoon den anderen Verkehrsteilnehmern an- oder aufzuzeigen, sind einheitliche Kennzeichnungen notwendig. Das kann durch die genannten Projektionen auf den Boden, durch einen sichtbaren Lichtstrahl in der Luft, durch LED-Streifen am Dach und / oder durch Nutzung der Außenpositionslampen erfolgen.

Jedes Ausführungsbeispiel der Signalanlage 110 kann dazu ausgebildet sein, Zuordnungen (und damit Zugehörigkeiten) von verschiedenartigen Verbandsfahrzeugen in einem gemischten Verband 100 anzuzeigen.

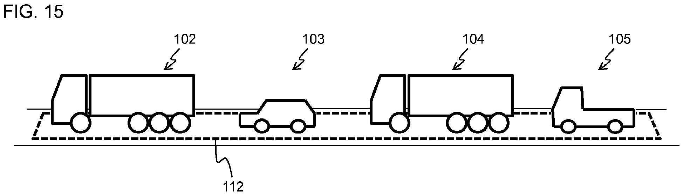

Figur 15 zeigt schematisch einen solchen gemischten Verband 100 mit verschiedenartigen Verbandsfahrzeugen 102, 103, 104 und 105. Dargestellt ist lediglich ein Ausführungsbeispiel (basierend auf dem zweiten Ausführungsbeispiel) zur Kennzeichnung um die Verbandsfahrzeuge. Das optische Anzeigen insbesondere entsprechend dem ersten und/oder dritten Ausführungsbeispiel ist (beispielsweise analog zu den Figuren 1 und 2 bzw. 4) umsetzbar.

In jedem Ausführungsbeispiel können Lichter und/oder Projektoren der Signalanlage 110 der Kommunikation mit den übrigen Verkehrsteilnehmern (Fremdfahrzeugen oder zukünftigen Verbandsfahrzeugen) dienen. Je nach anzuzeigendem Zustand oder Zustandsänderung kann das von der Signalanlage 110 ausgesendete Licht in der Form (z.B. durch Symbole), der Farbe (beispielsweise Gefahr: rot, OK: grün), der Intensität, der Frequenz (konstant oder langsam bzw. schnell blinkend), der Dynamik (z.B. das Zusammenschalten mehrere Lichter, um einen sich bewegenden Pfeil zu erzeugen) und/oder der Synchronität (beim gemeinsamen Steuern von Lichtern oder Projektoren, die an unterschiedlichen Verbandsfahrzeugen angeordnet sind) variieren.

Jedes Ausführungsbeispiel kann wie folgt abgewandelt sein. Anstelle der Projektion auf den Boden zwischen oder um die Fahrzeuge herum können holografische Projektoren Bilder, z.B. zwischen den oder um die Fahrzeuge herum erzeugen, um die Verbundenheit des Platoons 100 zu verdeutlichen. Anstelle der LED-Bänder können alternative Anzeigeelemente eingesetzt werden. Einsetzbar sind LED-Panels oder Flüssigkristallanzeigen (LCD). Diese besitzen darüber hinaus die Möglichkeit, mehr Informationen (z.B. Textnachrichten) zu übermitteln. Ferner können zur Kennzeichnung neben den Außenpositionsleuchten auch weitere, am Fahrzeug verbaute, lichttechnische Einrichtungen (z.B. Frontscheinwerfer, Fahrtrichtungsanzeiger, etc.) genutzt werden.

Jedes Ausführungsbeispiel kann wie folgt erweitert sein. Die Signalanlage 110 kann gezielt dazu genutzt werden, überholenden Fahrzeugen aktiv eine Lücke zum Einscheren aufzuzeigen. Alternativ oder ergänzend kann die Signalanlage 110 für andere Einsatzzwecke genutzt werden. Hierzu gehört beispielsweise die Nutzung bei einer Solofahrt, um andere Verkehrsteilnehmer zu informieren oder als Begleitfahrzeug für einen Schwerlasttransport. Alternativ oder ergänzend kann die Signalanlage 110 dazu genutzt werden, den übrigen Verkehrsteilnehmern weitere Informationen zum Verband 100 (beispielsweise dessen Länge, Anzahl von Verbandsfahrzeugen, Gefahrguttransport, etc.) anzuzeigen.

Alternativ oder ergänzend kann jedes Ausführungsbeispiel wie folgt erweitert sein. Die Signalanlage 110 kann den übrigen Verkehrsteilnehmern signalisieren, welche Fahrzeuge des Verbands 100 manuell und welche automatisiert gesteuert (d.h. gefahren) werden. Alternativ oder ergänzend kann die Signalanlage 110 umgebende Verkehrsteilnehmer über kritische Manöver des Verbands 100 informieren (z.B. Gefahrenbremsung, automatische Notbremsung, etc.). Alternativ oder ergänzend kann die Signalanlage 110 dazu genutzt werden, um einem neuen Teilnehmer (d.h. einem zukünftigen Verbandsfahrzeug) die Position zum Einreihen in den Verband 100 aufzuzeigen.

Sämtliche beschriebenen Ausführungsbeispiele (insbesondere verschiedenen Leuchtsysteme) können miteinander kombiniert und/oder gekoppelt sein.

Wie anhand vorstehender exemplarischer Ausführungsbeispiele ersichtlich wurde, erreichen Ausführungsbeispiele der Signalanlage 110 verschiedene Vorteile. Beispielsweise kann die Zusammengehörigkeit aller im Platoon befindlichen Fahrzeuge optisch angezeigt werden. Die Zusammengehörigkeit von Fahrzeugen in einem gemischten Platoon (beispielsweise mit LKWs und PKWs) kann optisch angezeigt werden.

Die Kennzeichnung kann sich außerhalb der Verbandsfahrzeuge befinden und/oder für die übrigen Verkehrsteilnehmer gut einsehbar sein. Die Kennzeichnung kann von mehreren Seiten des Platoons einsehbar sein.

Die Signalanlage 110 kann ein informatives Anzeigen von Platoon-Manövern (beispielsweise Spurwechsel, An- und/oder Abkoppeln) an die umgebenden Verkehrsteilnehmer ermöglichen.

Anfang und Ende des Platoons können explizit angezeigt sein. Insbesondere kann eine unmittelbare Abschätzung der Platoon-Länge ermöglicht sein.

Lücken zum Einscheren für unvollendete und/oder abgebrochene Überholmanöver und/oder das Einscheren an Autobahnauffahrten können optisch angezeigt werden.

Umgebenden Verkehrsteilnehmer können Informationen zum Zustand des Platoons angezeigt werden.

In einem Beispielszenario können vier Lastkraftwagen als Verbandsfahrzeuge sich in einem Platoon befinden und entlang der Autobahn fahren. Der Platoon (oder Verband) ist für andere Verkehrsteilnehmer durch eine, um alle Fahrzeuge herum auf den Boden projizierte Markierung gut sichtbar und gekennzeichnet. Ein PKW versucht das Platoon zu überholen. Das Überholmanöver muss jedoch plötzlich beendet werden und der Fahrer des PKW will in den Platoon-Verbund einscheren. Die Platooning-Funktion erkennt das geplante Manöver des PKWs und signalisiert dem PKW-Fahrer über projizierte Pfeile auf den Boden sowie durch aktivierte LED Bänder auf den Dächern der Platoon-Teilnehmer (d.h. der Verbandsfahrzeuge) in welche Lücke der PKW vorzugsweise einscheren kann. Der Fahrzeugabstand zwischen den, die Lücke umgebenden Platoon-Fahrzeugen (d.h. den Verbandsfahrzeugen) vergrößert sich und der PKW reiht sich ein.

In einem weiteren Beispielszenario können drei PKW, zwei LKW und ein Kleintransporter in einem Platoon entlang der Autobahn fahren. Die Signalanlage umfasst ein Leuchtsystem auf den Dächern der Fahrzeuge, durch die der Verband für die weiteren Verkehrsteilnehmer gut als Einheit angezeigt ist. Bedingt durch eine Baustelle muss der Verband die Fahrspur wechseln. Dieses geplante Manöver wird den nachfolgenden Fahrzeugen durch das Leuchtsystem klar und verständlich angezeigt. Die Fahrer dieser Fahrzeuge erkennen das Vorhaben, halten Abstand und ermöglichen dem kompletten Platoon den Fahrspurwechsel. Das Platoon bleibt zusammen und kann verbrauchsoptimiert weiterfahren.

Obwohl die Erfindung in Bezug auf exemplarische Ausführungsbeispiele beschrieben worden ist, ist es für einen Fachmann ersichtlich, dass verschiedene Änderungen vorgenommen werden können. Ferner können viele Modifikationen vorgenommen werden, um eine bestimmte Anwendung der Brennkraftmaschine oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Kraftfahrzeugverband
- 102: Kraftfahrzeug des Kraftfahrzeugverbands
- 103, 104, 105: Weiteres Kraftfahrzeug des Kraftfahrzeugverbands
- 110: Signalanlage des Kraftfahrzeugs
- 112: Lichtprojektion der Signalanlage des Kraftfahrzeugs
- 114: Weitere Lichtprojektion der Signalanlage des weiteren Kraftfahrzeugs
- 116: Überlapp zwischen Lichtprojektion und weiterer Lichtprojektion
- 118: Bereich zum Einscheren des Fremdfahrzeugs
- 120: Fremdfahrzeug

## Patentansprüche

1. Signalanlage (110) für ein Kraftfahrzeug (102), insbesondere ein Nutzfahrzeug, das dazu ausgebildet ist, an einem Kraftfahrzeugverband (100) hintereinander fahrender Kraftfahrzeuge (102, 104) mit gemeinsamer Längs- und/oder Quersteuerung teilzunehmen,
wobei die Signalanlage (110) dazu ausgebildet ist, im Außenbereich des Kraftfahrzeugs (102) eine Zuordnung zu mindestens einem weiteren Kraftfahrzeug (104) des Kraftfahrzeugverbands (100) optisch anzuzeigen, das vorzugsweise unmittelbar vor und/oder hinter dem Kraftfahrzeug (102) im Kraftfahrzeugverband (100) fährt, wobei ein Zustand gemeinsamer Längs- und/oder Quersteuerung des Kraftfahrzeugverbands (100) optisch angezeigt wird, und
wobei die Signalanlage (110) ausgebildet ist, zur Erfassung des anzuzeigenden Zustands oder der anzuzeigenden Änderung des Zustands mit mindestens einer Komponente des Kraftfahrzeugs (102) in Signalverbindung zu stehen, die zur gemeinsamen Längs- und/oder Quersteuerung ausgebildet ist,
**dadurch gekennzeichnet, dass**
die Signalanlage (110) ferner dazu ausgebildet ist, von der Steuerungseinheit einen Zustand zur Führung eines einscherenden Fremdfahrzeugs zu erfassen und einen Bereich (118) zum Einscheren des Fremdfahrzeugs zwischen dem Kraftfahrzeug (102) und dem mindestens einen weiteren Kraftfahrzeug (104) anzuzeigen.

2. Signalanlage (110) nach Anspruch 1, wobei die Signalanlage (110) ferner dazu ausgebildet ist, eine Änderung des Zustands optisch anzuzeigen, vorzugsweise ein Herstellen und/oder Auflösen des Zustands gemeinsamer Längs- und/oder Quersteuerung.

3. Signalanlage (110) nach Anspruch 1 oder 2, wobei die Signalanlage (110) ausgebildet ist, zur Erfassung des anzuzeigenden Zustands oder der anzuzeigenden Änderung des Zustands mit mindestens einer der folgenden Komponente des Kraftfahrzeugs (102) in Signalverbindung zu stehen, die zur gemeinsamen Längs- und/oder Quersteuerung ausgebildet ist:
- einer Funkschnittstellen zur Datenkommunikation mit früheren, bestehenden oder zukünftigen Kraftfahrzeugen des Kraftfahrzeugverbands (100), vorzugsweise dem mindestens einen weiteren Kraftfahrzeug (104), einem Führungsfahrzeug des Kraftfahrzeugverbands (100), dem unmittelbar vor dem Kraftfahrzeug (102) fahrenden Kraftfahrzeug (104) und/oder dem unmittelbar hinter dem Kraftfahrzeug (102) fahrenden Kraftfahrzeug (104) des Kraftfahrzeugverbands (100);
- Sensoren zum Messen einer Geschwindigkeit von und/oder eines Abstands zu mindestens einem weiteren Fahrzeug, vorzugsweise dem unmittelbar vor und/oder hinter dem Kraftfahrzeug (102) fahrenden Kraftfahrzeug (104) des Kraftfahrzeugverbands (100) und/oder einem Fremdfahrzeug außerhalb des Kraftfahrzeugverbands (100);
- Aktuatoren zur Umsetzung von Steuerbefehle der Längs- und/oder Quersteuerung; und
- einer vorzugsweise an die Funkschnittstelle, die Sensoren und/oder die Aktuatoren angeschlossene Steuerungseinheit der Längs- und/oder Quersteuerung zum Empfangen, Verarbeiten und/oder Senden von Steuerbefehlen und/oder Messdaten der Längs- und/oder Quersteuerung.

4. Signalanlage (110) nach einem der Ansprüche 1 bis 3, wobei die Signalanlage (110) einen Fahrtrichtungsanzeiger, Umrissleuchten und/oder Positionslichter des Kraftfahrzeugs (102) umfasst, und dazu ausgebildet ist, von der Steuerungseinheit einen den oder die Fahrtrichtungsanzeiger, Umrissleuchten und/oder Positionslichter zum Anzeigen der Zuordnung steuernden Zustand oder eine Änderung des Zustands zu erfassen.

5. Signalanlage (110) nach einem der Ansprüche 1 bis 4, wobei die Signalanlage (110) dazu ausgebildet ist, einen gemeinsamen Spurwechsel der Kraftfahrzeuge des Kraftfahrzeugverbands (100) im Außenbereich optisch übereinstimmend anzuzeigen, wobei das übereinstimmende Anzeigen des Spurwechsels die Zuordnung anzeigt.

6. Signalanlage (110) nach einem der Ansprüche 1 bis 5, wobei die Signalanlage (110) mindestens eine Projektionseinheit umfasst, und das optische Anzeigen der Zuordnung eine Lichtprojektion (112) mittels der mindestens einen Projektionseinheit auf eine von den hintereinander fahrenden Kraftfahrzeugen des Kraftfahrzeugverbands (100) gemeinsam genutzte Fahrbahn umfasst.

7. Signalanlage (110) nach Anspruch 6, wobei sich die Lichtprojektion (112) auf der Fahrbahn zwischen dem Kraftfahrzeug (102) und dem mindestens einen weiteren Kraftfahrzeug (104) des Kraftfahrzeugverbands (100) erstreckt.

8. Signalanlage (110) nach Anspruch 6 oder 7, wobei auf der Fahrbahn die Lichtprojektion (112) des Kraftfahrzeugs (102) mit einer weiteren Lichtprojektion (114) des mindestens einen weiteren Kraftfahrzeugs (104) überlappt (116).

9. Signalanlage (110) nach einem der Ansprüche 1 bis 8, wobei die Signalanlage (110) mindestens eine sich an einer Seitenkante des Dachs des Kraftfahrzeugs (102) in Längsrichtung erstreckende Lichtleiste umfasst, und die Zuordnung mittels der mindestens einen Lichtleiste angezeigt wird.

10. Signalanlage (110) nach Anspruch 9, wobei ein durchgehendes Lichtsignal der Lichtleiste einem Zustand gemeinsamer Längs- und/oder Quersteuerung entspricht, ein Lauflichtsignal der Lichtleiste hin zum weiteren Kraftfahrzeug (104) einem Herstellen des Zustands gemeinsamer Längs- und/oder Quersteuerung entspricht und/oder ein Lauflichtsignal der Lichtleiste weg vom weiteren Kraftfahrzeug (104) einem Auflösen des Zustands gemeinsamer Längs- und/oder Quersteuerung entspricht.

11. Kraftfahrzeug (102), insbesondere Nutzfahrzeug, das dazu ausgebildet ist, an einem Kraftfahrzeugverband (100) hintereinander fahrender Kraftfahrzeuge (102, 104) mit gemeinsamer Längs- und/oder Quersteuerung teilzunehmen,
**dadurch gekennzeichnet, dass**
das Kraftfahrzeug (102) mindestens eine Signalanlage (110) gemäß einem der Ansprüche 1 bis 10 umfasst.

## Claims

1. Signalling system (110) for a motor vehicle (102), preferably a commercial vehicle, which is configured to take part in a motor vehicle convoy (100) of motor vehicles (102, 104) travelling one behind the other with common longitudinal and/or lateral control,
wherein the signalling system (110) is configured to optically indicate in the outer area of the motor vehicle (102) an assignment to at least one further motor vehicle (104) of the motor vehicle convoy (100), which preferably drives directly in front of and/or behind the motor vehicle (102) in the motor vehicle convoy (100),
wherein a state of common longitudinal and/or lateral control of the motor vehicle convoy (100) is optically indicated, and
wherein the signalling system (110) is configured to be in signal connection with at least one component of the motor vehicle (102), which is configured for common longitudinal and/or lateral control, in order to detect the state to be indicated or the change in state to be indicated,
**characterised in that**
the signalling system (110) is also configured to detect from the control unit a state for guiding a merging third-party vehicle and to indicate a range (118) for merging the third-party vehicle between the motor vehicle (102) and the at least one further motor vehicle (104).

2. Signalling system (110) according to claim 1, wherein the signalling system (110) is further configured to optically indicate a change of state, preferably an establishment and/or a disengaging of the state of joint longitudinal and/or lateral control.

3. Signalling system (110) according to claim 1 or 2, wherein the signalling system (110) is configured to be in signal connection with at least one of the following components of the motor vehicle (102), which is configured for common longitudinal and/or lateral control, in order to detect the state to be indicated or the change in state to be indicated:
- a radio interface for data communication with previous, existing or future motor vehicles of the motor vehicle convoy (100), preferably the at least one further motor vehicle (104), a lead vehicle of the motor vehicle convoy (100), the motor vehicle (104) travelling directly in front of the motor vehicle (102) and/or the motor vehicle (104) of the motor vehicle convoy (100) travelling directly behind the motor vehicle (102);
- sensors for measuring a speed of and/or a distance to at least one further vehicle, preferably the motor vehicle (104) of the motor vehicle convoy (100) travelling directly in front of and/or behind the motor vehicle (102) and/or a third-party vehicle outside the motor vehicle convoy (100);
- actuators for implementing control commands for longitudinal and/or lateral control; and
- a control unit, preferably connected to the radio interface, the sensors and/or the actuators, of the longitudinal and/or lateral control system for receiving, processing and/or transmitting control commands and/or measurement data of the longitudinal and/or lateral control system.

4. Signalling system (110) according to one of claims 1 to 3, wherein the signalling system (110) comprises a direction indicator, clearance lights and/or position lights of the motor vehicle (102), and is configured to detect, from the control unit, a state controlling the direction indicator(s), clearance lights and/or position lights for indicating the state or a change in the state.

5. Signalling system (110) according to one of claims 1 to 4, wherein the signalling system (110) is configured to optically indicate a common lane change of the motor vehicles of the motor vehicle convoy (100) in the outer area in a matching manner, wherein the matching indication of the lane change indicates the assignment.

6. Signalling system (110) according to one of claims 1 to 5, wherein the signalling system (110) comprises at least one projection unit, and the optical indication of the assignment comprises a light projection (112) by means of the at least one projection unit onto a lane shared by the motor vehicles of the motor vehicle convoy (100) travelling one behind the other.

7. Signalling system (110) according to claim 6, wherein the light projection (112) extends on the roadway between the motor vehicle (102) and the at least one further motor vehicle (104) of the motor vehicle convoy (100).

8. Signalling system (110) according to claim 6 or 7, wherein, on the roadway, the light projection (112) of the motor vehicle (102) overlaps (116) with a further light projection (114) of the at least one further motor vehicle (104).

9. Signalling system (110) according to one of claims 1 to 8, wherein the signalling system (110) comprises at least one light strip extending in the longitudinal direction at a side edge of the roof of the motor vehicle (102), and the assignment is indicated by means of the at least one light strip.

10. Signalling system (110) according to claim 9, wherein a continuous light signal of the light strip corresponds to a state of common longitudinal and/or lateral control, a running light signal of the light strip towards the further motor vehicle (104) corresponds to establishing the state of common longitudinal and/or lateral control and/or a running light signal of the light strip away from the further motor vehicle (104) corresponds to cancelling the state of common longitudinal and/or lateral control.

11. Motor vehicle (102), preferably commercial vehicle, which is configured to participate in a motor vehicle formation (100) of motor vehicles (102, 104) travelling one behind the other with common longitudinal and/or lateral control,
**characterised in that**
the motor vehicle (102) comprises at least one signalling system (110) according to one of claims 1 to 10.

## Revendications

1. Installation de signalisation (110) pour un véhicule automobile (102), en particulier un véhicule utilitaire qui est réalisé pour participer à un convoi de véhicules automobiles (100) composé de véhicules automobiles (102, 104) qui roulent les uns derrière les autres avec une commande longitudinale et/ou transversale commune,
dans laquelle l'installation de signalisation (110) est réalisée pour indiquer optiquement à l'extérieur du véhicule automobile (102) une attribution à au moins un véhicule automobile supplémentaire (104) du convoi de véhicules automobiles (100), qui roule de préférence immédiatement devant et/ou derrière le véhicule automobile (102) dans le convoi de véhicules automobiles (100),
dans laquelle un état de commande longitudinale et/ou transversale commune du convoi de véhicules automobiles (100) est indiqué optiquement, et
dans laquelle, pour détecter l'état à indiquer ou la modification à indiquer de l'état, l'installation de signalisation (110) est réalisée pour être avec au moins un composant du véhicule automobile (102) en liaison de signalisation qui est réalisée pour la commande longitudinale et/ou transversale commune,
**caractérisée en ce que** l'installation de signalisation (110) est en outre réalisée pour détecter en provenance de l'unité de commande un état pour guider un véhicule tiers qui s'insère et pour indiquer une zone (118) pour l'insertion du véhicule tiers entre le véhicule automobile (102) et ledit au moins un véhicule automobile supplémentaire (104).

2. Installation de signalisation (110) selon la revendication 1, dans laquelle l'installation de signalisation (110) est en outre réalisée pour indiquer optiquement un changement de l'état, de préférence un établissement et/ou une annulation de l'état de commande longitudinale et/ou transversale commune.

3. Installation de signalisation (110) selon la revendication 1 ou 2, dans laquelle, pour détecter l'état à indiquer ou la modification à indiquer de l'état, l'installation de signalisation (110) est réalisée pour être avec au moins un composant du véhicule automobile (102) en liaison de signalisation qui est réalisée pour la commande longitudinale et/ou transversale commune :
- une interface radio pour la communication de données avec des véhicules automobiles précédents, existants ou futurs du convoi de véhicules automobiles (100), de préférence avec ledit au moins un véhicule automobile supplémentaire (104), un véhicule de tête du convoi de véhicules automobiles (100), le véhicule automobile (104) roulant immédiatement devant le véhicule automobile (102) et/ou le véhicule automobile (104) roulant immédiatement après le véhicule automobile (102) du convoi de véhicules automobiles (100) ;
- des capteurs pour mesurer une vitesse d'au moins un véhicule supplémentaire et/ou une distance par rapport à celui-ci, de préférence par rapport au véhicule automobile (104) roulant immédiatement devant et/ou derrière le véhicule automobile (102) du convoi de véhicules automobiles (100), et/ou à un véhicule tiers en dehors du convoi de véhicules automobiles (100) ;
- des actionneurs pour mettre en œuvre des ordres de la commande longitudinale et/ou transversale ; et
- une unité de commande, connectée de préférence à l'interface radio, aux capteurs et/ou aux actionneurs, de la commande longitudinale et/ou transversale pour recevoir, traiter et/ou envoyer des ordres et/ou des données de mesure de la commande longitudinale et/ou transversale.

4. Installation de signalisation (110) selon l'une quelconque des revendications 1 à 3, dans laquelle l'installation de signalisation (110) comprend des feux indicateurs de direction, des feux d'encombrement et/ou des feux de position du véhicule automobile (102), et est réalisée pour détecter en provenance de l'unité de commande un état ou une modification de l'état commandant le ou les feux indicateurs de direction, les feux d'encombrement et/ou les feux de position afin d'indiquer l'attribution.

5. Installation de signalisation (110) selon l'une quelconque des revendications 1 à 4, dans laquelle l'installation de signalisation (110) est réalisée pour indiquer de manière optiquement cohérente à l'extérieur un changement de voie commun des véhicules automobiles du convoi de véhicules automobiles (100), dans laquelle l'indication cohérente du changement de voie indique l'attribution.

6. Installation de signalisation (110) selon l'une quelconque des revendications 1 à 5, dans laquelle l'installation de signalisation (110) comprend au moins une unité de projection, et l'indication optique de l'attribution comprend une projection lumineuse (112) au moyen de ladite au moins une unité de projection sur une chaussée partagée par les véhicules automobiles roulant les uns derrière les autres du convoi de véhicules automobiles (100).

7. Installation de signalisation (110) selon la revendication 6, dans laquelle la projection lumineuse (112) sur la chaussée s'étend entre le véhicule automobile (102) et ledit au moins un véhicule automobile supplémentaire (104) du convoi de véhicules automobiles (100).

8. Installation de signalisation (110) selon la revendication 6 ou 7, dans laquelle sur la chaussée, la projection lumineuse (112) du véhicule automobile (102) se chevauche (116) avec une projection lumineuse supplémentaire (114) dudit au moins un véhicule automobile supplémentaire (104).

9. Installation de signalisation (110) selon l'une quelconque des revendications 1 à 8, dans laquelle l'installation de signalisation (110) comprend au moins une rampe lumineuse s'étendant au niveau d'un bord latéral du toit du véhicule automobile (102) dans la direction longitudinale, et l'attribution est indiquée au moyen de ladite au moins une rampe lumineuse.

10. Installation de signalisation (110) selon la revendication 9, dans laquelle un signal lumineux continu de la rampe lumineuse correspond à un état de commande longitudinale et/ou transversale commune, un signal de chenillard de la rampe lumineuse allant vers le véhicule automobile supplémentaire (104) correspond à l'établissement de l'état de commande longitudinale et/ou transversale commune, et/ou signal de chenillard de la rampe lumineuse s'éloignant du véhicule automobile supplémentaire (104) correspond à l'annulation de l'état de commande longitudinale et/ou transversale commune.

11. Véhicule automobile (102), en particulier véhicule utilitaire, qui est réalisé pour participer à un convoi de véhicules automobiles (100) de véhicules automobiles roulants les uns derrière les autres (102, 104) avec une commande longitudinale et/ou transversale commune, **caractérisé en ce que** le véhicule automobile (102) comprend au moins une installation de signalisation (110) selon l'une quelconque des revendications 1 à 10.
